# FASCICULE DE BREVET EUROPEEN

(11) **EP 3 456 634 B1**
(45) Date de publication et mention de la délivrance du brevet: **30.10.2019**
(21) Numéro de dépôt: 18184976.1
(22) Date de dépôt: 23.07.2018
(51) Int. Cl.: B64C 21/02, B64D 15/02, F04D 29/68, B64D 33/02, H05H 1/48

(54) **AILE COMPORTANT UN BORD D'ATTAQUE PRESENTANT DES MOYENS POUR PREVENIR LE COLMATAGE DE TROUS REALISES DANS LE BORD D'ATTAQUE**
FLÜGEL MIT EINER VORDERKANTE UND VERFAHREN ZUR VERMEINDUNG VON VERSTOPFUNG DER LÖCHER IN DER VORDERKANTE
WING WITH A LEADING EDGE HAVING MEANS TO PREVENT CLOGGING OF HOLES LOCATED ON THE LEADING EDGE

(30) Priorité: 15.09.2017 FR 1758563
(43) Date de publication de la demande: 20.03.2019
(73) Titulaire: Airbus Operations S.A.S., 31060 Toulouse (FR)
(72) Inventeur: FAROUZ-FOUQUET, Mathias, 31300 TOULOUSE (FR)
(74) Mandataire: Gicquel, Olivier Yves Gérard

(56) Documents cités:
- EP-A1- 2 913 266
- WO-A1-2016/062645
- US-A- 3 521 837
- US-A1- 2007 221 788
- US-A1- 2016 107 203

## Description

### DOMAINE TECHNIQUE

La présente invention concerne une aile comportant un bord d'attaque et des moyens pour prévenir le colmatage de trous réalisés dans le bord d'attaque, ainsi qu'un aéronef comportant au moins une telle aile.

### ETAT DE LA TECHNIQUE ANTERIEURE

Une aile d'aéronef comporte un bord d'attaque qui est la partie avant du profil aérodynamique constituant l'aile. Pour assurer un écoulement laminaire le long du bord d'attaque, il est connu de percer le bord d'attaque d'une multitude de trous, classiquement de 60µm de diamètre dans une tôle d'environ 0,4 à 0,6 millimètres d'épaisseur, afin d'aspirer l'air extérieur depuis l'intérieur de l'aile à travers ces trous ou pour expulser l'air depuis l'intérieur de l'aile vers l'extérieur. A titre d'exemples les documents US2007/0221788 et WO2016/062645 décrivent un système de gestion de l'écoulement laminaire le long du bord d'attaque de l'aile via air pulsé.

Ce bord d'attaque étant en outre souvent sujet au dépôt de résidus organiques, ces trous peuvent être obstrués par ces résidus et ils ne peuvent plus remplir correctement leur fonction et l'écoulement de l'air n'est dès lors, plus laminaire mais turbulent. Les documents US2016/0107203 et EP2913266 proposent de nettoyer des trous par arc électrique. Le document US3521837 propose d'éliminer de la glace formée dans les trous par chauffage d'une pièce métallique. Les solutions proposées dans ces documents ne permettent pas d'éliminer les résidus organiques de manière optimisée.

### EXPOSE DE L'INVENTION

Un objet de la présente invention est de proposer une aile comportant un bord d'attaque qui est percé d'une multitude de trous et équipé de moyens permettant d'éliminer les dépôts organiques qui se logent dans les trous.

A cet effet, est proposée une aile d'un aéronef, ladite aile comportant :
- un bord d'attaque formant un caisson délimité par une paroi et une peau électriquement conductrice constituant un intrados et un extrados de l'aile et percée de trous, où la paroi relie une face intérieure de l'intrados à une face intérieure de l'extrados,
- une pompe prévue pour aspirer l'air présent dans le caisson et/ou pour injecter de l'air dans le caisson,
ladite aile étant caractérisée en ce que chaque trou est équipé d'un système anti-colmatage qui comporte :
- une électrode réalisée dans un matériau électriquement conducteur,
- un corps réalisé dans un matériau électriquement isolant et présentant un fût qui loge dans le trou et qui présente un orifice central dans lequel loge l'électrode, où la face extérieure du fût présente au moins une dent, où l'au moins une dent est en saillie par rapport à la face extérieure du fût et s'étend sur la hauteur du fût, où l'au moins une dent est répartie autour du fût de manière à créer au moins un canal, et
- un générateur de tension connecté entre l'électrode et la peau.

Une telle installation permet d'éliminer les résidus qui sont logés dans les trous.

Avantageusement, pour chaque fût, une extrémité du fût est à fleur de la face extérieure de la peau.

Avantageusement, le corps présente un sabot qui est solidaire de l'autre extrémité du fût et qui vient en appui contre la face intérieure de la peau, et chaque canal se prolonge à l'intérieur du sabot pour le traverser.

Selon un mode de réalisation particulier, l'extrémité du fût qui est à fleur de la face extérieure de la peau est débouchante.

Selon un mode de réalisation particulier, l'extrémité du fût qui est à fleur de la face extérieure de la peau est borgne.

Avantageusement, l'électrode comprend une base qui vient en appui contre le corps lorsqu'une extrémité de l'électrode est introduite dans l'orifice central.

Avantageusement, la peau comporte un insert qui est électriquement conducteur et qui comporte une jupe qui recouvre la paroi intérieure du trou et un rebord solidaire de la jupe qui recouvre la face intérieure de la peau et auquel le générateur de tension est électriquement connecté.

L'invention propose également un aéronef comportant au moins une aile selon l'une des variantes précédentes.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 montre une vue de dessus d'un aéronef selon l'invention,
la Fig. 2 montre une vue de côté et en coupe selon la ligne II-II d'un bord d'attaque d'une aile de la Fig. 1,
la Fig. 3 montre une vue en perspective d'une partie du bord d'attaque d'une aile selon un premier mode de réalisation de l'invention,
la Fig. 4 montre une vue en perspective d'une partie du bord d'attaque d'une aile selon un deuxième mode de réalisation de l'invention,
la Fig. 5A montre une vue en coupe du bord d'attaque selon le premier mode de réalisation de l'invention,
la Fig. 5B montre une vue en coupe d'un bord d'attaque selon une variante de l'invention,
la Fig. 6A montre une vue en coupe d'un bord d'attaque selon une autre variante de l'invention, et
la Fig. 6B montre une vue en coupe d'un bord d'attaque selon une autre variante de l'invention.

### EXPOSE DETAILLE DE MODES DE REALISATION

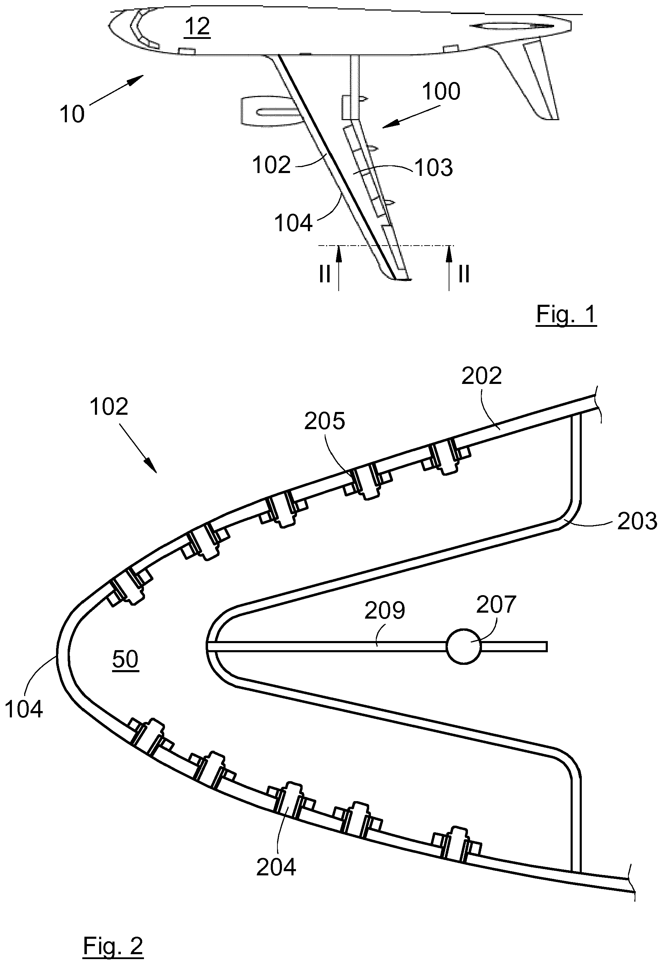

La Fig. 1 montre un aéronef 10 qui présente un fuselage 12 de part et d'autre duquel est fixée une aile 100 qui présente une partie principale 103 et un bord d'attaque 102 qui s'étend au-dessus et au-dessous de l'aile 100 en avant de la partie principale 103. La référence 104 montre une ligne de bord d'attaque qui est la ligne de séparation entre l'intrados et l'extrados du bord d'attaque 102.

La Fig. 2 montre le bord d'attaque 102 en coupe. Le bord d'attaque 102 prend la forme d'un caisson 50 qui est délimité par une peau 202 et une paroi 203. La peau 202 constitue un intrados et un extrados de l'aile 100, c'est-à-dire qu'elle prend la forme d'un U ouvert vers l'arrière de l'aéronef 10. La peau 202 comporte une face extérieure sur laquelle s'écoule l'air et une face intérieure orientée vers l'intérieur du bord d'attaque 102 et la paroi 203 relie la face intérieure de l'intrados à la face intérieure de l'extrados.

La peau 202 est percée d'une multitude de trous 205 qui assure le passage de l'air extérieur vers l'intérieur du caisson 50 et inversement.

Afin d'assurer une aspiration de l'air depuis l'extérieur à travers les trous 205 ou un refoulement de l'air vers l'extérieur à travers les trous 205, l'aile 100 est équipée d'une pompe 207 qui est prévue pour aspirer l'air présent dans le caisson 50 et/ou pour injecter de l'air dans le caisson 50. Ici, la pompe 207 est reliée à l'intérieur du caisson 50 par une canalisation 209.

Chaque trou 205 est équipé d'un système anti-colmatage 204.

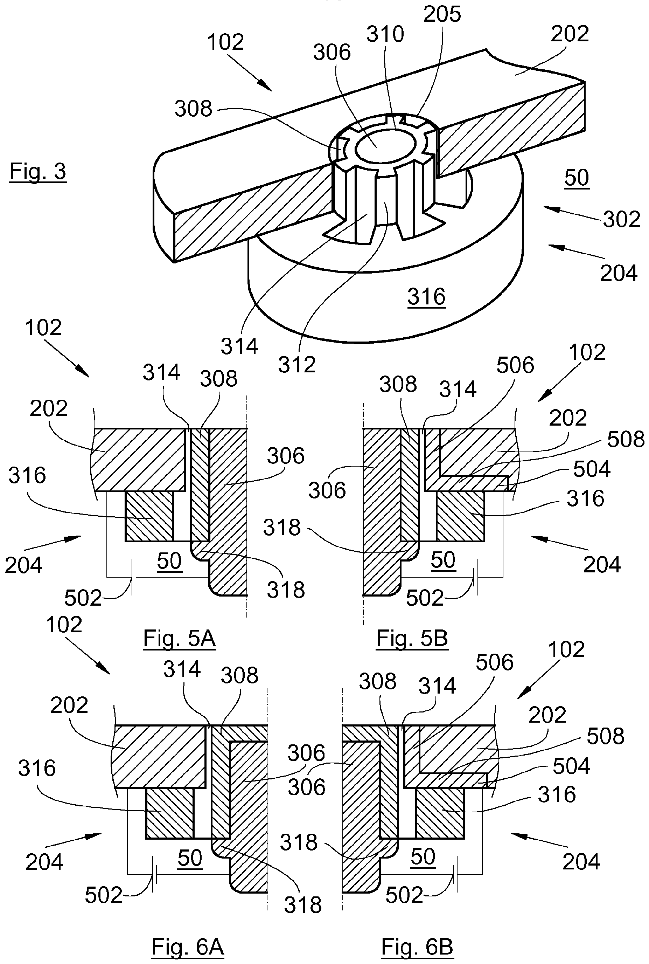

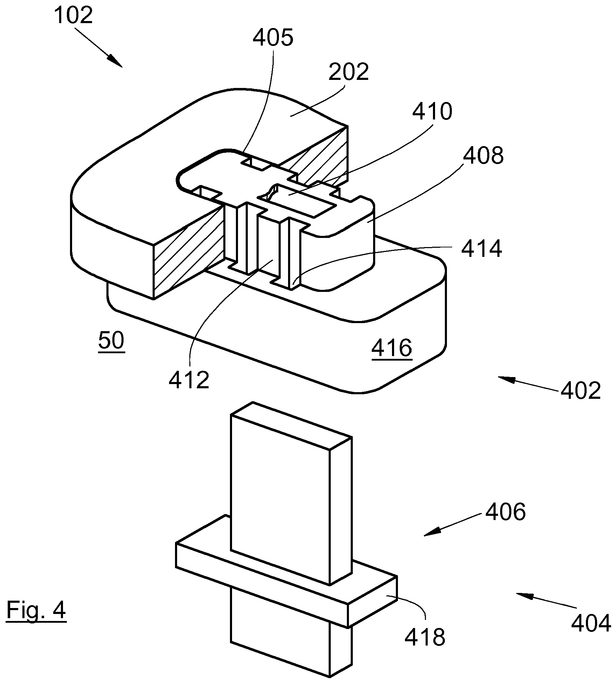

La Fig. 3 montre un système anti-colmatage 204 selon un premier mode de réalisation de l'invention et la Fig. 4 montre un système anti-colmatage 404 selon un deuxième mode de réalisation de l'invention.

Dans le premier mode de réalisation de la Fig. 3, le trou 205 est circulaire et dans le mode de réalisation de la Fig. 4, le trou 405 est rectangulaire. Bien sûr, il est possible d'avoir des trous de formes différentes.

Le système anti-colmatage 204, 404 comporte un corps 302, 402 réalisé dans un matériau électriquement isolant comme par exemple en céramique, et une électrode 306, 406 réalisée dans un matériau électriquement conducteur.

Le corps 302, 402 présente un fût 308, 408 qui a une forme qui lui permet d'être introduit dans le trou 205, 405. Dans le mode de réalisation de la Fig. 3, le fût 308 est cylindrique et dans le mode de réalisation de la Fig. 4, le fût 408 est rectangulaire.

L'axe du fût 308, 408 est parallèle à l'axe du trou 205, 405 dans lequel il est introduit. Le fût 308, 408 constitue un diélectrique.

La fixation du corps 302, 402 est assurée par tous moyens appropriés comme par exemple, collage ou fixation par bride. La hauteur du fût 308, 408 est au moins égale à la profondeur du trou 205, 405 de manière à placer une extrémité du fût 308, 408 à fleur de la face extérieure de la peau 202. En variante, l'extrémité du fût peut être placée en retrait de quelques millimètres par rapport à la face extérieure de la peau 202, ou en dépassement de l'ordre de dizaine de microns.

Le fût 308, 408 présente un orifice central 310, 410 dans lequel loge l'électrode 306, 406. Dans le mode de réalisation de la Fig. 3, l'orifice central 310 est cylindrique et dans le mode de réalisation de la Fig. 4, l'orifice central 410 est rectangulaire.

De la même manière, l'électrode 306, 406 présente une forme qui lui permet d'être logée dans l'orifice central 310, 410, c'est-à-dire ici cylindrique pour le mode de réalisation de la Fig. 3 et rectangulaire pour le mode de réalisation de la Fig. 4.

L'axe de l'orifice 310, 410 est parallèle à l'axe du trou 205, 405 et est donc globalement perpendiculaire à la peau 202.

La face extérieure du fût 308, 408 présente au moins une dent 312, 412, où ladite au moins une dent 312, 412 est en saillie par rapport à la face extérieure du fût 308, 408 et s'étend sur la hauteur du fût 308, 408 parallèlement à l'axe du fût 308, 408. L'au moins une dent 312, 412 est répartie autour du fût 308, 408 de manière à créer au moins un canal 314, 414 qui s'étend parallèlement à l'axe du fût 308, 408 et qui permettent le passage de l'air entre l'extérieur de la peau 202 et le caisson 50 ou inversement. L'au moins un canal 314, 414 présente une profondeur perpendiculairement à l'axe du trou 205, 405, qui est calibrée suivant le besoin en aspiration ou soufflage, selon un mode de réalisation particulier, la profondeur est de l'ordre de 60 µm. L'au moins un canal 314, 414 débouche à une de ces extrémités, du côté de la face extérieure de la peau 202, et à l'autre de ces extrémités, dans le caisson 50.

Dans le cas où il y a plusieurs dents 312, 412, chaque canal 314, 414 s'étend entre deux dents 312, 412 successives.

Les dimensions extérieures des dents 312, 412 sont prévues pour que les faces extérieures des dents 312, 412 viennent contre la paroi intérieure du trou 205 afin de positionner correctement le fût 308, 408 dans le trou 205, 405.

Pour chaque électrode 306, 406, l'aile 100 comporte également un générateur de tension (502 Figs. 5A-B et 6A-B) connecté entre l'électrode 306, 406 et la peau 202 qui est électriquement conductrice. Le générateur de tension est piloté par une unité de contrôle de l'aéronef 10.

Lorsque le générateur de tension est activé, il permet d'appliquer une différence de potentiel entre l'électrode 306, 406 et la peau 202. Lorsque la différence de potentiel est suffisante, un plasma est créé entre l'électrode 306, 406 et la peau 202 et ce plasma se propage à travers les canaux 314, 414 ce qui permet d'éliminer des résidus qui seraient accrochés dans les canaux 314, 414, que ces résidus soient organiques ou de la glace.

Pour faciliter l'alignement d'une extrémité du fût 308, 408 avec la face extérieure de la peau 202, le corps 302, 402 présente un sabot 316, 416 qui est solidaire de l'autre extrémité du fût 308, 408 et qui vient en appui contre la face intérieure de la peau 202 lors de la mise en place du corps 302, 402. Les dimensions du sabot 316, 416 sont telles qu'il est empêché de traverser le trou 205, 405.

Chaque canal 314, 414 se prolonge à l'intérieur du sabot 316, 416 pour le traverser et déboucher dans le caisson 50.

De la même manière, pour assurer le positionnement de l'électrode 306, 406 par rapport à l'orifice central 310, 410, lorsqu'une extrémité de l'électrode 306, 406 est introduite dans l'orifice central 310, 410, l'électrode 306, 406 comprend une base 318, 418 qui est solidaire de l'autre extrémité de l'électrode 306, 406 et qui vient en appui contre le corps 302, 402. Les dimensions de la base 318, 418 sont telles qu'elle est empêchée de traverser l'orifice central 310, 410.

Les variantes des Figs. 5A-B et 6A-B sont plus particulièrement décrites sur la base du premier mode de réalisation de l'invention, mais elles peuvent s'appliquer de la même manière au deuxième mode de réalisation.

La Fig. 5A est la représentation du mode de réalisation de la Fig. 1, où le générateur de tension 502 est connecté entre l'électrode 306 et la peau 202.

La Fig. 5B est une variante qui correspond au cas où la peau 202 est rendue électriquement conductrice par la mise en place d'un insert 504 qui est électriquement conducteur. L'insert 504 comporte une jupe 506, ici cylindrique creuse, qui recouvre la paroi intérieure du trou 205 et un rebord 508 solidaire de la jupe 506, ici sous la forme d'un disque, qui recouvre la face intérieure de la peau 202. Le générateur de tension 502 est électriquement connecté entre l'électrode 306 et l'insert 504, plus particulièrement le rebord 508. Dans ce mode de réalisation, les dimensions extérieures des dents 312, 412 sont prévues pour que les faces extérieures des dents 312, 412 viennent contre la paroi intérieure de la jupe 506.

Dans les modes de réalisation des Figs. 3, 5A-B, l'extrémité du fût 308 qui est à fleur de la face extérieure de la peau 202 est débouchante, laissant apparaître l'électrode 306, ce qui permet également la création d'un plasma entre l'électrode 306 et la face extérieure de la peau 202 pour éliminer les éventuels résidus présents.

Sur la partie droite de la Fig. 4, l'extrémité du fût 408 est également débouchante.

Dans ces cas, l'électrode 306, 406 est également de préférence à fleur de la surface extérieure de la peau 202.

Dans les modes de réalisation des Figs. 6A-B, l'extrémité du fût 308 qui est à fleur de la face extérieure de la peau 202 est borgne, ne laissant pas apparaître l'électrode 306.

Sur la partie gauche de la Fig. 4, l'extrémité du fût 408 est également borgne.

La Fig. 6A correspond au cas où la peau 202 est électriquement conductrice et la Fig. 6B correspond au cas où la peau 202 est rendue électriquement conductrice par la mise en place de l'insert 504. Dans ce dernier mode de réalisation également, les dimensions extérieures des dents 312, 412 sont prévues pour que les faces extérieures des dents 312, 412 viennent contre la paroi intérieure de la jupe 506 de l'insert 504.

Il est possible de prévoir qu'un même générateur de tension 502 alimente plusieurs électrodes 306, 406.

Bien que l'invention ait été décrite plus particulièrement dans le cas d'une aile, elle s'applique de la même manière à toutes les pièces d'un aéronef présentant un bord d'attaque, comme par exemple une dérive, un stabilisateur, une entrée d'air d'un moteur ou une nacelle motrice.

## Revendications

1. Aile (100) d'un aéronef (10), ladite aile (100) comportant :
- un bord d'attaque (102) formant un caisson (50) délimité par une paroi (203) et une peau (202) électriquement conductrice constituant un intrados et un extrados de l'aile (100) et percée de trous (205, 405), où la paroi (203) relie une face intérieure de l'intrados à une face intérieure de l'extrados,
- une pompe (207) prévue pour aspirer l'air présent dans le caisson (50) et/ou pour injecter de l'air dans le caisson (50),
ladite aile (100) étant **caractérisée en ce que** chaque trou (205, 405) est équipé d'un système anti-colmatage (204, 404) qui comporte :
- une électrode (306, 406) réalisée dans un matériau électriquement conducteur,
- un corps (302, 402) réalisé dans un matériau électriquement isolant et présentant un fût (308, 408) qui loge dans le trou (205, 405) et qui présente un orifice central (310, 410) dans lequel loge l'électrode (306, 406), où la face extérieure du fût (308, 408) présente au moins une dent (312, 412), où l'au moins une dent (312, 412) est en saillie par rapport à la face extérieure du fût (308, 408) et s'étend sur la hauteur du fût (308, 408), où l'au moins une dent (312, 412) est répartie autour du fût (308, 408) de manière à créer au moins un canal (314, 414), et
- un générateur de tension (502) connecté entre l'électrode (306, 406) et la peau (202).

2. Aile (100) selon la revendication 1, **caractérisée en ce que** pour chaque fût (308, 408), une extrémité du fût (308, 408) est à fleur de la face extérieure de la peau (202).

3. Aile (100) selon la revendication 2, **caractérisée en ce que** le corps (302, 402) présente un sabot (316, 416) qui est solidaire de l'autre extrémité du fût (308, 408) et qui vient en appui contre la face intérieure de la peau (202), et **en ce que** chaque canal (314, 414) se prolonge à l'intérieur du sabot (316, 416) pour le traverser.

4. Aile (100) selon l'une des revendications 2 ou 3, **caractérisée en ce que** l'extrémité du fût (308, 408) qui est à fleur de la face extérieure de la peau (202) est débouchante.

5. Aile (100) selon l'une des revendications 2 ou 3, **caractérisée en ce que** l'extrémité du fût (308, 408) qui est à fleur de la face extérieure de la peau (202) est borgne.

6. Aile (100) selon l'une des revendications précédentes, **caractérisée en ce que** l'électrode (306, 406) comprend une base (318, 418) qui vient en appui contre le corps (302, 402) lorsqu'une extrémité de l'électrode (306, 406) est introduite dans l'orifice central (310, 410).

7. Aile (100) selon l'une des revendications précédentes, **caractérisée en ce que** la peau (202) comporte un insert (504) qui est électriquement conducteur et qui comporte une jupe (506) qui recouvre la paroi intérieure du trou (205) et un rebord (508) solidaire de la jupe (506) qui recouvre la face intérieure de la peau (202) et auquel le générateur de tension (502) est électriquement connecté.

8. Aéronef (10) comportant au moins une aile (100) selon l'une des revendications précédentes.

## Patentansprüche

1. Flügel (100) eines Flugzeugs (10), wobei der Flügel (100) umfasst:
- eine Anströmkante (102), die eine Kammer (50) bildet, die durch eine Wand (203) und eine elektrisch leitende Haut (202) begrenzt wird, die eine Druckseite und eine Saugseite des Flügels (100) darstellt und von Löchern (205, 405), durchbohrt ist, wobei die Wand (203) eine Innenseite der Druckseite mit einer Innenseite der Saugseite verbindet,
- eine Pumpe (207), die dazu vorgesehen ist, die in der Kammer (50) vorhandene Luft abzusaugen und/oder Luft in die Kammer (50) einzuleiten,
wobei der Flügel (100) **dadurch gekennzeichnet ist, dass** jedes Loch (205, 405) mit einem Verstopfungsverhinderungssystem (204, 404) ausgestattet ist, das umfasst:
- eine Elektrode (306, 406), die aus einem elektrisch leitenden Material ausgeführt ist,
- einen Körper (302, 402), der aus einem elektrisch isolierenden Material ausgeführt ist und einen Schaft (308, 408) aufweist, der in dem Loch (205, 405) aufgenommen ist und eine zentrale Bohrung (310, 410) aufweist, in der die Elektrode (306, 406) aufgenommen ist, wobei die Außenseite des Schaftes (308, 408) mindestens einen Zahn (312, 412) aufweist, wobei der mindestens eine Zahn (312, 412) in Bezug auf die Außenseite des Schaftes (308, 408) vorsteht und sich über die Höhe des Schaftes (308, 408) erstreckt, wobei der mindestens eine Zahn (312, 412) um den Schaft (308, 408) herum so verteilt ist, dass mindestens ein Kanal (314, 414) geschaffen wird, und
- einen Spannungsgenerator (502), der zwischen der Elektrode (306, 406) und der Haut (202) angeschlossen ist.

2. Flügel (100) nach Anspruch 1, **dadurch gekennzeichnet, dass** bei jedem Schaft (308, 408) ein Ende des Schaftes (308, 408) bündig mit der Außenseite der Haut (202) ist.

3. Flügel (100) nach Anspruch 2, **dadurch gekennzeichnet, dass** der Körper (302, 402) einen Schuh (316, 416) aufweist, der fest mit dem anderen Ende des Schaftes (308, 408) verbunden ist und an der Innenseite der Haut (202) zur Anlage kommt, und dadurch, dass sich jeder Kanal (314, 414) im Inneren des Schuhs (316, 416) fortsetzt, um ihn zu durchqueren.

4. Flügel (100) nach einem der Ansprüche 2 oder 3, **dadurch gekennzeichnet, dass** das Ende des Schaftes (308, 408), das bündig mit der Außenseite der Haut (202) ist, offen ist.

5. Flügel (100) nach einem der Ansprüche 2 oder 3, **dadurch gekennzeichnet, dass** das Ende des Schaftes (308, 408), das bündig mit der Außenseite der Haut (202) ist, geschlossen ist.

6. Flügel (100) nach einem der vorhergehenden Ansprüche, **dadurch gekennzeichnet, dass** die Elektrode (306, 406) eine Basis (318, 418) beinhaltet, die an dem Körper (302, 402) zur Anlage kommt, wenn ein Ende der Elektrode (306, 406) in die zentrale Bohrung (310, 410) eingeführt ist.

7. Flügel (100) nach einem der vorhergehenden Ansprüche, **dadurch gekennzeichnet, dass** die Haut (202) einen Einsatz (504) aufweist, der elektrisch leitend ist und der einen Mantel (506) umfasst, der die Innenwand des Lochs (205) bedeckt, und einen fest mit dem Mantel (506) verbundenen Rand (508), der die Innenseite der Haut (202) bedeckt und an den der Spannungsgenerator (502) elektrisch angeschlossen ist.

8. Flugzeug (10) mit mindestens einem Flügel (100) nach einem der vorhergehenden Ansprüche.

## Claims

1. Wing (100) of an aircraft (10), said wing (100) comprising:
- a leading edge (102) forming a caisson (50) delimited by a wall (203) and an electrically conductive skin (202) forming a lower surface and an upper surface of the wing (100) and pierced with holes (205, 405), the wall (203) links an inner face of the lower surface to an inner face of the upper surface,
- a pump (207) provided to suck the air present in the caisson (50) and/or to inject air into the caisson (50),
said wing (100) being **characterized in that** each hole (205, 405) is equipped with an anti-clogging system (204, 404) which comprises:
- a electrode (306, 406) produced in an electrically conductive material,
- a body (302, 402) produced in an electrically insulating material and having a stem (308, 408) which lodges in the hole (205, 405) and which has a central orifice (310, 410) in which the electrode (306, 406) lodges, where the outer face of the stem (308, 408) has at least one tooth (312, 412), where the at least one tooth (312, 412) protrudes from the outer face of the stem (308, 408) and extends over the height of the stem (308, 408), where the at least one tooth (312, 412) is distributed around the stem (308, 408) so as to create at least one channel (314, 414), and
- a voltage generator (502) connected between the electrode (306, 406) and the skin (202).

2. Wing (100) according to Claim 1, **characterized in that**, for each stem (308, 408), one end of the stem (308, 408) is flush with the outer face of the skin (202).

3. Wing (100) according to Claim 2, **characterized in that** the body (302, 402) has a shoe (316, 416) which is integral to the other end of the stem (308, 408) and which comes to bear against the inner face of the skin (202), and **in that** each channel (314, 414) is extended into the shoe (316, 416) to pass through it.

4. Wing (100) according to either of Claims 2 and 3, **characterized in that** the end of the stem (308, 408) which is flush with the outer face of the skin (202) is open-ended.

5. Wing (100) according to either of Claims 2 and 3, **characterized in that** the end of the stem (308, 408) which is flush with the outer face of the skin (202) is blind.

6. Wing (100) according to one of the preceding claims, **characterized in that** the electrode (306, 406) comprises a base (318, 418) which comes to bear against the body (302, 402) when an end of the electrode (306, 406) is introduced into the central orifice (310, 410).

7. Wing (100) according to one of the preceding claims, **characterized in that** the skin (202) comprises an insert (504) which is electrically conductive and which comprises a skirt (506) which covers the inner wall of the hole (205) and a flange (508) integral to the skirt (506) which covers the inner face of the skin (202) and to which the voltage generator (502) is electrically connected.

8. Aircraft (10) comprising at least one wing (100) according to one of the preceding claims.
